# EUROPÄISCHE PATENTANMELDUNG

(11) **EP 1 344 658 A1**
(43) Veröffentlichungstag der Anmeldung: **17.09.2003**
(21) Anmeldenummer: 02005633.9
(22) Anmeldetag: 12.03.2002
(51) Int. Cl.: B60C 23/04

(54) **Vorrichtung zum Erfassen des Reifendrucks eines Kraftfahrzeugreifens**

(71) Anmelder: SIEMENS AKTIENGESELLSCHAFT, 80333 München (DE); THE GOODYEAR TIRE & RUBBER COMPANY, Akron, Ohio 44316-0001 (US)
(72) Erfinder: Benedict, Robert Leon, Tallmadge, Ohio 44278 (US); Hillenmayer, Franz, 93133 Burglengenfeld (DE); Parsons, Tony W., 1527 Luxembourg (LU); Shepler, Peter Ross, Stow, Ohio 44224 (US); Wagner, Dieter, 93164 Laaber (DE)
(74) Vertreter: Berg, Peter, Dipl.-Ing.

(57) **Zusammenfassung**

Eine Vorrichtung zum Erfassen des Reifendrucks eines Kraftfahrzeugreifens (6) weist einer Elektronikeinheit (1) mit einer damit verbundenen Antenne (2) auf. Die Elektronikeinheit (1) und die Antenne (2) sind auf einem elastischen, kreisringförmigen Träger (3) befestigt, der koaxial zur Radachse (8) an der Reifenseitenwand (7) in der Nähe der Felge (5) befestigt ist. Der Träger (3) ist nur mit seiner inneren Umfangseite am Reifen (6) befestigt ist, während die äußere Umfangseite frei in das Reifeninnere ragt.

## Beschreibung

Die Erfindung betrifft eine Vorrichtung zum Erfassen des Reifendrucks eines Kraftfahrzeugreifens.

Aus sicherheitstechnischen Gründen muss der Reifendruck von Kraftfahrzeugreifen regelmäßig überprüft werden. Hierzu sind in jedem Reifen Vorrichtungen zum Erfassen des Reifendrucks angeordnet. Diese weisen zumindest einen Drucksensor auf, der den Reifendruck misst. Der gemessene Wert wird dann in einem Signal mit Hilfe eines Senders über eine Antenne zu einem fahrzeugseitigen Empfänger übertragen. Die Übertragung kann dabei intermittierend in vorgegebenen Zeitabständen erfolgen oder nach Empfang eines Aufforderungssignals, das von einem fahrzeugseitigen Sender ausgesendet wird. Zusammen mit dem Aufforderungssignal kann Energie zu der Vorrichtung übertragen werden, die dann dazu benutzt wird, das Drucksignal zurück zum Fahrzeug zu senden.

Zusammen mit den Drucksignalen kann auch eine individuelle Kennung des Reifens in dem Drucksignal mitgesendet werden. Die Kennung ist jeweils in der Elektronikeinheit eines jeden Reifens gespeichert. Die von den fahrzeugseitigen Empfängern empfangenen Drucksignale werden einer fahrzeugseitigen, zentralen Auswerteeinheit zugeführt, in der dann jedes Signal ausgewertet und der gemessene Druck mit zugelassenen Referenzwerten verglichen wird. Bei Abweichung von dem Referenzwert wird eine Anzeige aktiviert, die dem Fahrer anzeigt, dass er geeignete Maßnahmen (Reifenwechsel oder Luft nachfüllen) einleiten sollte. Zur Sicherheit können auch mehrere Messungen gemacht und daraus ein Mittelwert oder ein zeitabhängiger Wert ermittelt werden, die dann mit dem Referenzwert, der sich ebenfalls zeitlich ändern kann, verglichen werden.

Eine bekannte Vorrichtung (EP 0 657 836 B1) weist eine Elektronikeinheit auf, die an einem Reifen des Fahrzeugs angeordnet ist. Mit der Elektronikeinheit ist eine Spule verbunden, die am Umfang des Reifens und vollständig an der inneren Reifenwand oder an der inneren Lauffläche des Reifens befestigt ist. Mit dieser Elektronikeinheit wird der Druck im Reifen gemessen. Wenn die fahrzeugseitige Antenne ein Aufforderungssignal aussendet, so wird infolge des Empfangs des Aufforderungssignals das Drucksignal über die Antenne drahtlos zu der fahrzeugseitigen Empfangsantenne zurückgesendet.

Wenn das Fahrzeug fährt (d.h. die Räder drehen sich), so verformen sich die Reifen einerseits aufgrund der Last des Fahrzeugs (Walken im Latschbereich) und andererseits aufgrund der herrschenden Zentrifugalkraft. Da bei der bekannten Vorrichtung die Antenne unmittelbar innen an der Reifenwand befestigt ist, unterliegt die Antenne einer großen mechanischen Belastung, insbesondere bei zusätzlichen, größeren Erschütterungen des Reifens, wenn beispielsweise über ein Bordstein oder eine Bodenschwelle gefahren wird. Denn die bekannte Antenne ist fest mit dem elastischen Reifen verbunden. Es besteht daher die Gefahr, dass die Antenne bricht, da sie im Gegensatz zu dem Gummireifen nicht so elastisch ist.

Es ist ein Ziel der Erfindung, eine Vorrichtung zum Erfassen des Reifendrucks eines Kraftfahrzeugreifens zu schaffen, deren Elektronikbauteile auch über längere Betriebsstandzeiten zuverlässig funktionieren.

Dieses Ziel wird erfindungsgemäß durch eine Vorrichtung zum Erfassen des Reifendrucks eines Kraftfahrzeugreifens mit den Merkmalen von Patentanspruch 1 gelöst. Dabei weist die Vorrichtung eine Elektronikeinheit auf, die mit einer Antenne verbunden ist. Sowohl die Elektronikeinheit als auch die Antenne sind dabei auf einem etwa elastischen, ringscheibenförmigen Träger angeordnet, der entlang seines inneren Umfangs am Reifen befestigt ist, während die äußere Umfangsseite frei in den Innenraum des Reifens ragt.

Durch diese einseitige Einspannung am Reifen und dem elastischen, flexiblen Träger werden Schwingungen und mechanische Belastungen, die auf den Reifen einwirken, nur gedämpft auf den Träger und dessen Elektronikeinheit sowie Antenne übertragen. Diese Elektronikbauteile werden daher im Betrieb des Kraftfahrzeugs nur wenig mechanisch belastet.

Bei der erfindungsgemäßen Vorrichtung ist die Antenne um die Felge herum und etwa koaxial zur Radachse angeordnet. Durch diese achssymmetrische Anordnung zusätzliche Unwuchten weitgehend vermieden. Da die Antenne über den Umfang des Reifens angeordnet ist, können Daten zwischen der Antenne und einer fahrzeugseitig angeordneten Antenne gut hin- und her übertragen werden, falls die fahrzeugseitige Antenne in der Nähe des Rades angeordnet ist.

Durch diesen Träger ist die gesamte Masse des Trägers plus Elektronikeinheit und Antenne etwa gleichmäßig über den Umfang verteilt, so dass nur geringe, durch den Träger bedingte Unwuchten auf das Rad und somit die Fahrstabilität wirken.

Das Befestigen des Trägers am Reifen kann in das Fertigungsverfahren des Reifens integriert werden. Der Träger und damit die Elektronikeinheit sind dann dem Reifen fest zugeordnet. Ein solcher Träger ist auch für jeden Reifen nachrüstbar oder austauschbar, wenn ein Reifenwechsel oder eine Reparatur des Reifens stattfindet.

Vorteilhafte Ausgestaltungen der Erfindung ergeben sich aus den Unteransprüchen. So kann die Antenne als Spule mit einer oder mehreren Windungen am Umfang des Trägers angeordnet sein und weitgehend von dem Trägermaterial umgeben sein. Dadurch ist die Antenne selber geschützt vor Umwelteinflüssen. Wenn der Träger aus einem flexiblen Material hergestellt ist, so werden Schwingungen gedämpft, die durch mechanische Einwirkung auf den Reifen zum Träger hin übertragen werden. Beim Drehen der Räder ergeben sich keine Quetschungen des Rings. Selbst bei extremer Belastung des Reifens (wie Kurvenfahrt) oder extremen Quetschungen des Reifens (Bewegen des Reifens über eine scharfe Kante) und daraus resultierender Berührung des Reifens mit dem Träger, kann dieser durch seine Flexibilität oder Elastizität die mechanische Belastung weitgehend auffangen, so dass die Antenne und die Elektronikeinheit weitgehend geschützt sind.

Der Träger ist mit seiner Antenne vorzugsweise an der inneren, der Fahrzeugseite zugewandten Wand des Reifens im Bereich des Reifenwulstes befestigt. Somit ist die Antenne möglichst nahe an einer fahrzeugseitig angeordneten Antenne, die üblicherweise in der Nähe des Rades oder des Federbeines angeordnet ist. Zum Übertragen von Signalen reichen dann geringe Energien aus. Bei Vorrichtungen mit eigener Energieversorgung (Batterie) wird dadurch die Energieversorgung geschont und hält länger an. Bei batterielosen Vorrichtungen (Transponderverfahren) braucht weniger Energie zu der Vorrichtung hin übertragen zu werden, damit dann das Drucksignal zurückgesendet werden kann.

Da die beiden Antennen nahe beieinander angeordnet sind, können die Daten mit niederfrequente Trägerfrequenzen moduliert übertragen werden. Diese Signale haben ohnehin eine kurze Reichweite. Dies hat jedoch den Vorteil, dass die Drucksignale von Vorrichtungen in den anderen Reifen des Fahrzeugs nicht empfangen werden. Es ist somit eine eindeutige Zuordnung möglich von jeder Vorrichtung in jeweils einem Reifen zu der jeweiligen Radposition.

Der Träger kann mittels Spritzgießen hergestellt werden, wobei die Antenne und die Elektronikeinheit während des Spritzgießens mit eingespritzt werden und somit von Trägermaterial umgeben sowie durch diese geschützt sind. Damit der Reifendruck durch einen Drucksensor der Elektronikeinheit exakt gemessen werden kann, weist das Trägermaterial im Bereich der Elektronikeinheit ein Loch auf, das einen Luftkanal zwischen der Luft im Reifen und dem Drucksensor darstellt.

Der Träger kann auch durch einen flexiblen, elektrisch isolierenden Stoff hergestellt werden, der durch entsprechendes Zurechtschneiden und Falten des Stoffes die Antenne und die Elektronikeinheit umschließt. Auch hierbei ist darauf zu achten, dass ein Luftkanal zur Elektronikeinheit vorgesehen ist, damit der Druck im Reifen unverfälscht und genau gemessen werden kann.

Der Träger hat vorzugsweise eine etwa rechteckförmigen Profilquerschnitt. Je nach Anzahl der Windungen der Spulenantenne und der Größe der Elektronikeinheit und dessen Gehäuse kann der Träger auch T-förmig oder etwa L-förmig in seinem Profilquerschnitt ausgebildet sein.

Damit der Träger beim Fahren und damit beim Drehen der Räder nicht zu sehr mechanisch belastet wird, weist er im Bereich des Reifenwulstes ein etwa ringförmiges Verstärkungselement auf. Durch dieses Verstärkungselement wird bei der Drehung des Rades der Träger mechanisch stabilisiert und mechanisch durch Vermindern der Zugkraft auf den Träger entlastet.

Ein Ausführungsbeispiel der Erfindung wird im Folgenden anhand der schematischen Zeichnungen näher erläutert. Es zeigen:
- Figur 1: eine Seitenansicht eines Reifens mit einer erfindungsgemäßen Vorrichtung zum Erfassen des Reifendrucks eines Kraftfahrzeugreifens,
- Figur 2: eine Vorderansicht des Reifens nach Figur 1,
- Figur 3: einen Schnitt durch den Reifen entlang der Linie III-III in Figur 1 (in Vergrößerung) und
- Figur 4: eine schematische Ansicht der vier Räder eines Kraftfahrzeugs, in die jeweils eine erfindungsgemäße Vorrichtung gemäß Figur 1 eingebaut ist.

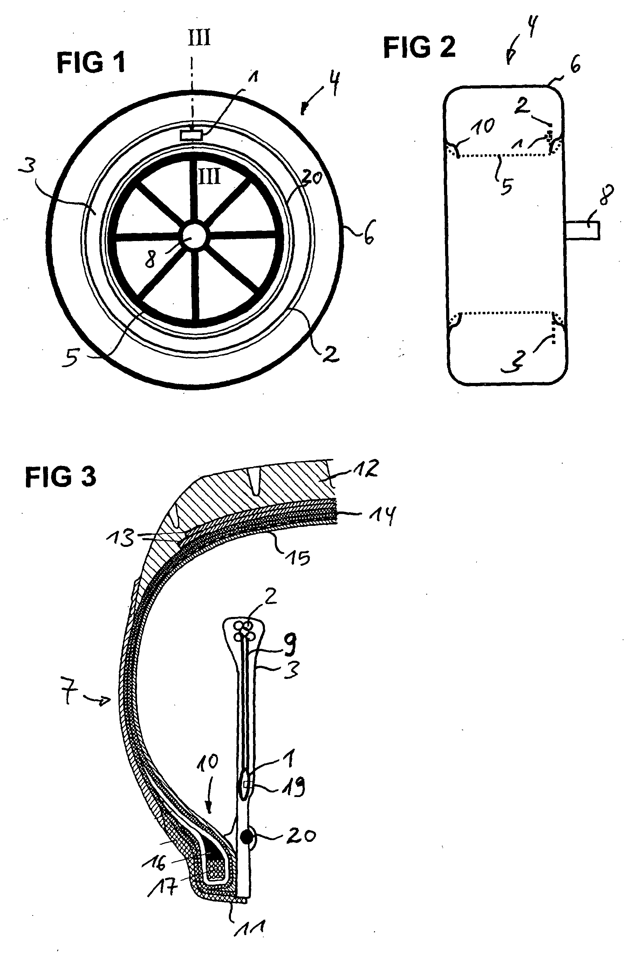

Eine erfindungsgemäße Vorrichtung zum Erfassen des Reifendrucks eines Kraftfahrzeugreifens weist eine Elektronikeinheit 1 auf (Figur 1), die zumindest einen nicht dargestellten Drucksensor und ggf. einen Temperatursensor aufwetst. Es können auch noch andere Sensoren, wie beispielsweise ein Beschleunigungssensor, Fliehkraftsensor, Drehzahlsensor oder ein Bewegungssensor in der Elektronikeinheit 1 enthalten sein. Diese können beispielsweise dazu dienen, dass ab einem vorbestimmten, gemessenen Wert einer entsprechenden physikalischen Größe das Aussenden des Drucksignals ausgelöst wird oder dass eine Initialisierung (Reifenkennung wird der Auswerteeinheit mitgeteilt) oder eine Lokalisierung (erkannte Radposition wird der Kennung zugeordnet) ausgelöst werden.

Mit dem Drucksensor wird der Reifendruck gemessen. Mit dem Temperatursensor wird die Temperatur im Reifen gemessen. Damit kann der gemessene Druckwert ggf. korrigiert werden. Des Weiteren weist die Elektronikeinheit 1 einen nicht dargestellten Sender auf, mit dessen Hilfe der gemessene Druckwert als Drucksignal über eine Antenne 2 ausgesendet wird.

Bei der erfindungsgemäßen Vorrichtung zum Erfassen des Reifendrucks eines Kraftfahrzeugreifens ist die Elektronikeinheit 1 und die Antenne 2 auf einem etwa ringscheibenförmigen Träger 3 angeordnet. Figur 1 zeigt einen Schnitt durch ein Rad 4, das einen auf eine Felge 5 montierten Reifen 6 aufweist. Der Träger 3 ist dabei an einer Seitenwand 7 des Reifens 6 in der Nähe der Felge 5 befestigt. Die Antenne 2 ist als Spule mit einer oder mehreren Windungen ausgebildet, wobei die Windungen etwa koaxial zur Radachse 8 um die Felge 5 herum verlaufen. Die Antenne 2 ist elektrisch über Verbindungsleitungen 9 (vgl. Figur 3) mit der Elektronikeinheit 1 verbunden.

In Figur 2 ist eine Vorderansicht des Rades 4 dargestellt, wobei die Felge 5 und der Träger 3 gestrichelt dargestellt sind, da diese sich innerhalb des Reifens 6 befinden. Aus dieser Figur ist gut ersichtlich, dass der Träger 3 an der inneren, der Fahrzeugseite hin zugewandten Seitenwand 7 des Reifens 6 befestigt ist. Die auf derselben Seite befindliche Radachse 8 stellt dabei die Fahrzeugseite dar.

Im vergrößerten Schnitt durch den Reifen 6, wie er in Figur 3 dargestellt ist, ist die Befestigung des Trägers 3 am Reifen 6 im Bereich des Reifenwulstes 10 gut zu erkennen. Der Träger 3 ist im Bereich des zu der Felge 5 hin gerichteten Umfangs an den Reifenwulst 10 angeklebt. Der Träger 3 steht bei diesem Ausführungsbeispiel auf einer Fußfläche 11 des Reifens 6 (einer so genannten Reifenzehe oder Toeguard) auf. Somit gibt es auch keine Dichtungsprobleme für den schlauchlosen Reifen 6, da der Träger 3 die Felge 5 nicht berührt.

Bei dem Reifen 6 handelt es sich beispielhaft um einen schlauchlosen Radialreifen mit einem herkömmlichen. Reifenaufbau mit einer Lauffläche 12, ein oder mehreren Gürtellagen 13 aus Stahlcord und/oder aus Nyloncord, einer Karkasse 14 und einer luftdichten Gummischicht 15 zum Abdichten des Reifens 6. Die Vorrichtung kann selbstverständlich auch bei allen anderen Typen von schlauchlosen Reifen 6 verwendet werden, bei denen der erfindungsgemäße Träger 3 an dem Reifen 6 in der offenbarten Weise befestigt werden kann.

Der Träger 3 ist am unteren Ende der Seitenwand 7 des Reifens 6 im Bereich des Wulstes 10 möglichst vollflächig an seinem äußeren Umfangsrand befestigt. Der Wulst 10 besteht aus einem Wulstkern 16 mit einem Stahlcord 17 zur mechanischen Stabilisierung des Wulstes 10. Das freie Ende (äußerer Trägerumfang) des Trägers 3 ragt in das Reifeninnere. Der Träger 3 ist derart im Reifen 6 befestigt, dass der äußere Trägerumfang rundum einen Mindest-Sicherheitsabstand zu dem Reifen 6 aufweist, damit der Träger 3 auch unter ungünstigen Bedingungen nur selten an den Reifen 6 anschlägt und so aufgrund seiner Elastizität mechanisch nicht beeinträchtigt oder beschädigt werden kann. Umgekehrt kann der Träger 3 die Reifeninnenwand aufgrund seiner Elastizität nicht beschädigen.

In dem Träger 3 ist die Antenne 2 als Spule mit einer oder mehreren Windungen angeordnet. Die Antenne 2 ist über Verbindungsleitungen 9 mit der Elektronikeinheit 1 verbunden. Die Elektronikeinheit 1 ist in der Nähe des Wulstes 10 und damit möglichst nahe der Radachse 8 angeordnet, damit die durch die Elektronikeinheit 1 erzeugte zusätzliche Unwucht beim Drehen des Rades 4 möglichst gering ist.

Der Träger 3 weist im Bereich der Elektronikeinheit 1 einen Luftkanal 19 auf, durch den eine offene Verbindung zwischen dem Drucksensor der Elektronikeinheit 1 und der Luft im Reifen 6 besteht. Somit kann der Reifendruck sicher und unverfälscht gemessen werden.

In der Nähe der Befestigung des Trägers 3 am Reifen 6 ist ein ringförmiges Verstärkungselement 20 angeordnet, das Zentrifugalkräfte beim Drehen der Räder 4 weitgehend aufnimmt. Somit erfährt der Träger 3 keine zusätzliche Belastung durch eine Zugkraft oder Zentrifugalkraft beim Drehen der Räder 4. Außerdem dient dieses Verstärkungselement 20 zur mechanischen Stabilisierung des Trägers 3.

Der Profilquerschnitt des Trägers 3 (wie er in Figur 3 dargestellt ist) ist hier etwa T-förmig ausgebildet. Die T-Form ist dabei durch die hier dargestellten fünf Windungen der Antenne 2 bedingt. Bei nur einer Windung wird der Träger 3 an seinem äußeren Umfangsrand dünner und der Profilquerschnitt ist dann etwa rechteckförmig. Der Profilquerschnitt kann auch etwa L-förmig ausgebildet sein. Vorteilhaft ist es, wenn der Profilquerschnitt über den gesamten Umfang gleichförmig und konstant ist, damit durch diese Symmetrie keine zusätzliche Unwucht entsteht und somit der Träger 3 und die mechanische Verbindung zum Reifen 6 (Klebe- oder Vulkanisierfläche) weniger mechanisch belastet wird.

Der Träger 3 ist aus einem flexiblen, elastischen Material, wie beispielsweise Gummi oder Polyurethan (PUR) hergestellt. Das elastische Material kann auch durch Gewebematerial verstärkt werden. Der Träger 3 kann dabei durch Spritzgießen geformt werden, wobei Antenne 2 und Elektronikeinheit 1 beim Spritzgießen mit eingegossen werden. Antenne 2 und Elektronikeinheit 1 sind somit vollständig (mit Ausnahme des Luftkanals 19) von Trägermaterial umgeben. Das Trägermaterial darf dabei nicht starr sein, sondern muss flexibel oder nachgiebig ausgebildet sein, damit Schwingungen durch das Material gedämpft werden und nicht zu sehr die Befestigung des Trägers 3 am Reifen 6 mechanisch belasten. Zudem muss der Träger 3 einigermaßen schwingungsstabil in dem Reifen 6 angeordnet sein und in seiner Lage auch bei größeren Erschütterungen verbleiben. Es sollte also eine gewisse Steifigkeit aufweisen, die beispielsweise durch das eingebrachte Verstärkungsgewebe erreicht wird.

Falls der Träger 3 zudem aus einem elektrisch isolierenden Werkstoff hergestellt ist, so können die Windungen der Antenne 2 als blanke Drähte umspritzt werden und sind dadurch von den anderen elektrisch leitenden Teilen isoliert. Die Elektronikeinheit 1 braucht dann nicht in separates Gehäuse untergebracht werden. Dadurch wird die Elektronikeinheit 1 und auch die Antenne 2 leichter und stellen eine kleinere Unwucht dar.

Als Trägermaterial kann auch ein anderer flexibler Stoff verwendet werden, der beispielsweise durch ein spezielles Gewebe (z.B. Glasfaser) oder durch einen anderen geeigneten Stoff verstärkt ist. Dieser Werkstoff kann dann durch Ausschneiden und Zusammenfalten (die Antenne 2 und die Elektronikeinheit 1 werden dabei mit eingeschlagen) die Form des Trägers 3 bilden. Somit sind dann Antenne 2 und Elektronikeinheit 1 von dem Werkstoff umgeben. Lediglich der Luftkanal 19 wird frei gelassen, damit eine Verbindung zwischen dem Drucksensor der Elektronikeinheit 1 und der Reifenluft vorhanden ist, um den Druck sicher zu messen.

Das umlaufende, ringförmige Verstärkungselement 20 kann beispielsweise ein Stahlring sein. Ebenso können fasergewebeverstärkte Stoffe aus der Nylonfamilie, wie Aramid (beispielsweise mit den Handelsnamen Kevlar®, Twaron® oder Nomex®) verwendet werden. Aramid-Verstärkungsfasern besitzen ein sehr hohes Energieaufnahmevermögen (Schlagzähigkeit), eine sehr hohe spezifische Festigkeit sowie sehr hohe Zugfestigkeit und Schwingungsdämpfung. Die chemische Beständigkeit und Wasserfestigkeit ist ebenfalls gut.

Der Träger 3 ist an seinem frei in den Reifeninnenraum ragenden Ende in radialer Richtung zur Lauffläche 12 hin und in seitlicher Richtung zur Seitenwand 7 hin mit einem Abstand zu dem Reifen 6 montiert. Dadurch wird auch unter ungünstigen mechanischen Bedingungen ein Kontakt von Reifen 6 und Träger 3 vermieden, wodurch ein Schutz für den Träger 3 gegeben ist. Bei extremen Kurvenfahrten kann der Träger 3 zwar an die Seitenwand 7 des Reifens 6 anlehnen, aber eine Beschädigung sowohl des Reifens 6 als auch des Trägers 3 ist durch die Elastizität des Trägers weitgehend ausgeschlossen. Hierzu muss die Steifigkeit des Trägers 3 groß genug sein. Gleichwohl muss der Träger 3 elastisch, flexibel und nachgiebig sein, um mechanische Belastungen beim Drehen der Räder 4 zumindest dämpfend aufzufangen. Außerdem sollte der Träger 3 mit seinen Bauteilen (Antenne 2, Elektronikeinheit 1, Verstärkungselement 20) nur ein geringes Gewicht aufweisen.

Der Träger 3 kann durch Kleben oder Vulkanisieren an den Reifenwulst 10 befestigt werden. Besonders hohe Stabilität wird erreicht, wenn der Träger 3 entlang des gesamten inneren Umfangs im Bereich des Reifenwulstes 10 befestigt ist. Andere, funktionell gleichwertige Befestigungsarten sind ebenso möglich.

Typische Abmessungen für den Träger 3, beispielsweise bei einem 15-Zoll-Reifen sind für den Außendurchmesser etwa 48 cm, für den Innendurchmesser etwa 38 cm und für seine Dicke etwa 3 mm. Somit ergibt sich ein Breite des etwa kreisringförmigen Trägers 3 von etwa 5 cm.

Die Elektronikeinheit 1 sollte von ihrem Gewicht her auf ein Minimum reduziert werden. Derzeit beträgt das Gewicht der Elektronikeinheit 1 etwa 3 bis 5 g. Je schwerer die Elektronikeinheit 1 ist, desto näher sollte sie in Richtung Radachse 8 auf dem Träger 3 angeordnet sein, damit zusätzliche Unwuchten durch die Elektronikeinheit 1 beim Drehen der Räder 4 nicht zu groß werden.

Der Träger 3 ist etwa wie eine übergroße Beilagscheibe ausgebildet, die jedoch flexibel und somit auch zusammenlegbar ist. Damit wird die Lagerhaltung erleichtert. Der Träger 3 mit Antenne 2 und Elektronikeinheit 1 kann auch als Ersatzteil nachträglich in jeden Reifen 6 montiert werden. Vorteilhaft ist es, wenn der Träger 3 beim Fertigungsverfahren des Reifens 6 oder unmittelbar nach Fertigstellung des Reifens 6 in einer erweiterten Fertigungslinie mit in den Reifen 6 integriert wird. Somit können Reifen 6 einfach ausgetauscht werden, ohne dass der Träger 3 separat entfernt werden muss. Daher darf der Träger 3 nicht auf der Felge 5 befestigt sein, sondern immer nur am Reifen 6 selber. Dies hat zusätzlich den Vorteil, dass Identifikationsdaten (Kennung) des Reifens 6, die in der Elektronikeinheit 1 gespeichert sein können, der Kombination Reifen 6 und Träger 3 fest zugeordnet sind. Als Identifikationsdaten können Herstelldatum, Herstellerparameter, Reifentyp, maximale Geschwindigkeit, maximale Achslast und/oder günstiger Reifendruckbereich verwendet werden.

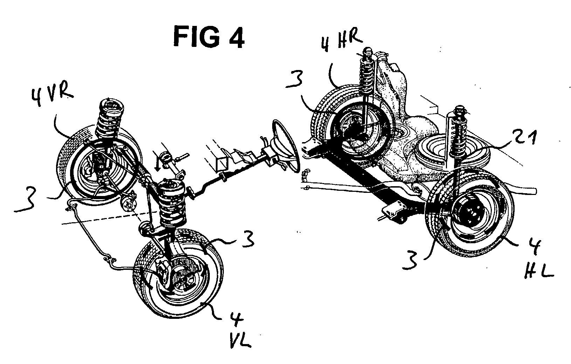

Figur 4 zeigt die Anordnung von erfindungsgemäßen Vorrichtungen in jedem Fahrzeugrad (VR = vorn rechts, VL = vorne links, HR = hinten rechts, HL = hinten links). Somit können in jedem montierten Reifen 6 die herrschenden Reifendrücke gemessen werden.

Jeder Träger 3 ist dabei auf der der Fahrzeuginnenseite hin gewandte Seitenwand 7 des jeweiligen Reifes befestigt. Wenn nun entsprechende - nicht dargestellte - Empfangsantennen fahrzeugseitig in der Nähe der Räder 4 angeordnet sind (beispielsweise am Federbein 21 oder in der Nähe der Radachse 8), so können die Signale gut und sicher von den Vorrichtungen in den Rädern auf die Empfänger auf der Fahrzeugseite und von dort zu einer zentralen Auswerteeinheit übertragen werden. Da die Antennen etwa koaxial um die Radachse 8 oder Felge 5 herum angeordnet sind, bleibt die Übertragungsstrecke zwischen reifenseitiger Antenne 2 und fahrzeugseitiger Antenne immer gleich lang. Es werden reproduzierbare Übertragungsverhältnisse hergestellt.

Mit dieser Anordnung der Antennen ist auch eine sichere Zuordnung jeder reifenseitigen Vorrichtung zur jeweiligen Radposition möglich, da nur über die den Radpositionen zugeordneten Empfänger Signale von den dortigen Vorrichtungen empfangen können. Signale von anderen Rädern können - wenn überhaupt - nur stark gedämpft empfangen werden, so dass nur die Empfangsempfindlichkeit entsprechend eingestellt werden muss oder nur die Signale mit der größten Amplitude weiterverarbeitet werden.

Vorzugsweise werden die Vorrichtungen bei Trägerfrequenzen von etwa 125 kHz betrieben, wodurch die Reichweite der Signale ohnehin stark begrenzt ist bei einer nur geringen Sendeleistung (Reichweite üblicherweise kleiner als 50 cm). Für diese Frequenzen sind Antennen 2 in Form von Spulen besonders geeignet, was zu einer induktiven Übertragung der Signale führt. Daher ist es auch selbstverständlich, dass die Antenne 2 sowohl als Sende- als auch als Empfangsantenne verwendet werden kann.

Die Antenne 2 kann ein geschlossener Antennenring (360°-Antenne), sie kann auch eine oder mehrere Windungen aufweisen, wobei im Bereich der Verbindungsleitungen die letzte Windung nicht ganz geschlossen ist. Signale können von und zu der Antenne 2 mittels Transformatorprinzip übertragen werden (d.h. mit einer zusätzlichen Koppelspule). Bei vollständig geschlossenen Windungen kann auch eine so genannte Stromzange verwendet werden, um Signale der Antenne 2 zuführen oder welche von dort abzugreifen.

Eine solche Antenne 2 hält auch über längere Betriebsstandzeiten (d.h. über Jahre, in denen der Reifen 6 montiert ist) die im Betrieb auftretenden, mechanischen Belastungen gut aus, da sie durch den Träger 3 geschützt im Reifen 6 angeordnet ist. Der Träger 3 ist daher von seiner Mechanik her so ausgelegt, dass er zumindest genau so lange hält, wie für die Lebensdauer des Reifens vorgesehen ist.

## Patentansprüche

1. Vorrichtung zum Erfassen des Reifendrucks eines Kraftfahrzeugreifens mit
- einer Elektronikeinheit (1), die zumindest einen Sensor zum Messen des Reifendrucks und zumindest einen Sender aufweist, mit dessen Hilfe die gemessenen Werte zum Aussenden aufbereitet werden, und mit
- zumindest einer Antenne (2), die mit dem Sender verbunden ist und über die die gemessenen Werte ausgesendet werden,
**dadurch gekennzeichnet, dass** sie einen etwa kreisringförmigen Träger (3) aufweist, auf dem die Elektronikeinheit (1) und die Antenne (2) angeordnet sind, der mit seiner inneren Umfangseite am Reifen (6) befestigt ist, während die äußere Umfangseite frei in das Reifeninnere ragt.

2. Vorrichtung nach Anspruch 1, **dadurch gekennzeichnet, dass** die Antenne (2) entlang des Umfangs des Trägers (3) angeordnet ist.

3. Vorrichtung nach einem der vorhergehenden Ansprüche, **dadurch gekennzeichnet, dass** die Antenne (2) in dem Träger (3) angeordnet ist und weitgehend von Trägermaterial umgeben ist.

4. Vorrichtung nach einem der vorhergehenden Ansprüche, **dadurch gekennzeichnet, dass** der Träger (3) aus einem flexiblen oder elastischen Material hergestellt ist.

5. Vorrichtung nach Anspruch 1, **dadurch gekennzeichnet, dass** der Träger (3) an der inneren, der Fahrzeugmitte zugewandeten Seitenwand (7) des Reifens (6) im Bereich des Reifenwulstes (10) befestigt ist.

6. Vorrichtung nach einem der vorhergehenden Ansprüche, **dadurch gekennzeichnet, dass** der Träger (3) durch Spritzgießen hergestellt wird, wobei die Antenne (2) und die Elektronikeinheit (1) umspritzt werden.

7. Vorrichtung nach einem der Ansprüche 1 bis 5, **dadurch gekennzeichnet, dass** der Träger (3) durch einen flexiblen, elektrisch isolierenden Stoff hergestellt wird, wobei durch Falten des Stoffes die Antenne (2) und die Elektronikeinheit (1) umschlossen werden.

8. Vorrichtung nach einem der vorhergehenden Ansprüche, **dadurch gekennzeichnet, dass** der Träger (3) einen etwa rechteckförmigen, einen etwa T-förmigen oder einen etwa L-förmigen Profilquerschnitt hat.

9. Vorrichtung nach einem der vorhergehenden Ansprüche, **dadurch gekennzeichnet, dass** der Träger (3) im Bereich der Befestigung am Reifenwulst (10) ein etwa ringförmiges Verstärkungselement (20) aufweist, durch das der Träger (3) mechanisch stabilisiert im Reifen (6) gehalten wird.

10. Vorrichtung nach einem der vorhergehenden Ansprüche, **dadurch gekennzeichnet, dass** das Trägermaterial im Bereich der Elektronikeinheit (1) ein Loch aufweist, das einen Luftkanal (19) zu einem Drucksensor der Elektronikeinheit (1) darstellt.
